# EUROPÄISCHE PATENTSCHRIFT

(11) **EP 3 253 590 B1**
(45) Veröffentlichungstag und Bekanntmachung des Hinweises auf die Patenterteilung: **05.12.2018**
(21) Anmeldenummer: 16700814.3
(22) Anmeldetag: 15.01.2016
(51) Int. Cl.: B60B 1/14, B60B 27/02, B60B 1/08

(54) **MOTORRADRAD**
MOTORCYCLE WHEEL
ROUE DE MOTOCYCLE

(30) Priorität: 04.02.2015 DE 102015201950
(43) Veröffentlichungstag der Anmeldung: 13.12.2017
(73) Patentinhaber: Bayerische Motoren Werke Aktiengesellschaft, 80809 München (DE)
(72) Erfinder: MOHR, Matthias, 85609 Aschheim (DE); ADAM, Andreas, 80999 München (DE)
(86) Internationale Anmeldenummer: PCT/EP2016/050756
(87) Internationale Veröffentlichungsnummer: WO 2016/124371

(56) Entgegenhaltungen:
- FR-A1- 2 278 504
- TW-A- 201 141 720
- US-A- 4 035 895
- US-A- 4 809 802

## Beschreibung

Die Erfindung betrifft ein mehrteiliges Motorradrad, insbesondere für Enduromotorräder.

Für Enduromotorräder werden wegen ihrer hohen Elastizität vorzugsweise Speichenräder verwendet. Jedoch sind Speichenräder im Vergleich zu Guss- oder Schmiederädern deutlich schwerer und teurer in der Herstellung sowie in den Materialkosten. Gussräder sind wiederum eher nicht geeignet für den Einsatz im Endurobereich, da sie wegen der geringeren Duktilität des Werkstoffes kaum Geländetauglichkeit bieten.

Weitere Motorradräder sind aus den Schriften FR 2 278 504 A1, US 4 035 895 A, TW 201 141 720 A und US 4 809 802 A bekannt.

Der Erfindung liegt deshalb die Aufgabe zugrunde, ein Motorradrad bereit zu stellen, das Geländetauglichkeit bei geringerem Gewicht und weniger Kosten bei dem Materialeinsatz und der Herstellung vereint.

Diese Aufgabe wird durch eine Merkmalskombination gemäß Patentanspruch 1 gelöst.

Dabei wird erfindungsgemäß ein Motorradrad mit einer geschmiedeten Felge und einem zentralen Nabenanschlussbereich vorgeschlagen, wobei sich einstückig an der Felge ausgebildete Speichen von der Felge zu dem zentralen Nabenanschlussbereich erstrecken, und ein an einem Motorrad befestigbares, eine Nabe des Motorradrades bildendes Nabenelement lösbar an dem Nabenanschlussbereich befestigbar ist. Das Nabenelement ist dabei vorzugsweise aus Druckguss oder Kokillenguss gefertigt.

Durch die Trennung des an dem Motorrad zu befestigenden Nabenelements von der Felge mit den daran ausgebildeten Speichen in unterschiedliche Bauteile wird ein Baukastensystem gewährleistet, das es ermöglicht, unterschiedliche Ausbildungen an Felgen für unterschiedliche Einsatzzwecke oder an unterschiedliche Modelle zu montieren, ohne dass das Nabenelement getauscht werden müsste. Auch bei einer beschädigten Felge bzw. im Reparaturfall kann ein einfacher Ersatz der Felge erfolgen.

Durch die Verwendung eines Schmiederads werden die Herstellungskosten und das Gewicht des Motorrades gegenüber Speichenrädern deutlich reduziert. Die zweiteilige Lösung ist zudem kostengünstiger gegenüber vollständig geschmiedeten Rädern, wie sie beispielsweise bei Supersport-Motorrädern zum Einsatz kommen. Ferner verbessert sich das Verhalten des Rades bezüglich Höhen- und Seitenschlag. Durch die einteilige Ausbildung der Felge und den Speichen ist eine große Designfreiheit gewährleistet.

In der Erfindung ist vorgesehen, dass der Nabenanschlussbereich eine Axialöffnung bildet, durch den das Nabenelement axial steckbar und an dem Nabenanschlussbereich befestigbar ist. Somit kann sich das Nabenelement durch die axiale Breite der Felge erstrecken und Anschlussmöglichkeit und an das Motorrad und an den Nabenanschlussbereich bereitstellen.

In einer weiteren günstigen Ausführungsvariante ist vorgesehen, dass der Nabenanschlussbereich und das Nabenelement in einer axialen Draufsicht eine Sternform aufweisen. Die Sternform bietet die Möglichkeit zwischen in Umfangsrichtung angrenzenden und sich radial auswärts erstreckenden Sternarmen jeweils Befestigungspositionen zwischen dem Nabenteil und der Nabenaufnahme vorzusehen, an denen die beiden Bauteile verschraubt werden.

In einer Ausführung ist ferner vorgesehen, dass das Nabenelement sich radial erstreckende Stege aufweist, die im montierten Zustand mit Ausnehmungen des Nabenanschlussbereichs in Eingriff stehen. Die Stege bieten ein flächiges Anliegen und vergrößern die Drehmomentübertragbarkeit zwischen dem Nabenteil und der Nabenaufnahme, d.h. mittelbar mit der Felge und dem Reifen.

In einer alternativen Ausführungsform weist das Nabenelement einen Flansch auf, über den es radial und axial an dem Nabenanschlussbereich anliegend befestigt ist. Das radiale Anliegen ist auch durch die oben beschriebene Durchstecklösung in einfacher Weise ermöglicht.

Die mehrteilige Ausführung des Motorradrades mit einem getrennten Nabenelement ist ferner dahingehend vorteilhaft, dass für im Radbereich vorgesehene Bauteile oder Bauteilgruppen, wie beispielsweise die Bremsanlage oder den Antrieb, an dem Nabenelement Aufnahmen, Ausformungen oder dergleichen angeordnet oder angeformt sein können. In einer Variante sind beispielsweise Bremsendome an dem Nabenelement angeordnet oder in dieses integriert.

Der Nabenanschlussbereich ist erfindungsgemäß mehrteilig an jeder der Speichen ausgebildet. In dem Fall erfolgt eine Verbindung bzw. Anbindung zwischen dem Nabenteil und einem Endabschnitt der einzelnen Speichen, in dem der Nabenanschlussbereich vorgesehen ist. Eine umlaufende einteilige Verbindung der einzelnen Nabenanschlussbereiche ist nicht nötig. Ferner ist vorteilhaft, dass das Nabenelement als Hohlkörper ausgebildet ist. Hierdurch wird bei dem Gussteil erheblich Gewicht eingespart.

Die axiale Erstreckung des Nabenelements ist in einer Ausführungsvariante einer Weise festgelegt, dass sie im Wesentlichen einer axialen Breite der Felge entspricht.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig.1: eine Seitenansicht eines Motorrades,
- Fig.2: eine Schnittansicht des Rades aus Figur 1.

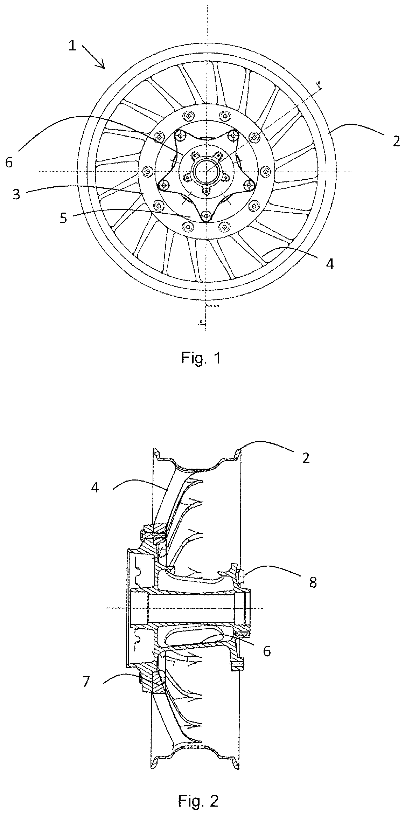

In Figur 1 ist ein nicht erfindungsgemäßes zweiteiliges Motorradrad 1 in einer Seitenansicht dargestellt. Das Motorradrad 1 umfasst eine geschmiedete Felge 2 und einen zentralen Nabenanschlussbereich 3. Zwischen der Felge 2 und dem Nabenanschlussbereich 3 erstrecken sich einstückig an der Felge 2 ausgebildete Speichen 4. Die Form und Erstreckung der Speichen 4 ist variabel festlegbar. Der Nabenanschlussbereich 3 bildet eine Axialöffnung 5, durch die ein Nabenelement 6 gesteckt und an dem Nabenanschlussbereich 3 über eine Vielzahl von Schrauben lösbar befestigt ist. Das Nabenelement 6 ist wiederum an einem nicht gezeigten Motorrad festlegbar.

In der gezeigten Ausführung weist das in seiner Axialerstreckung im Wesentlichen als Hohlkörper ausgebildete Nabenelement 6 in einem axialen Endabschnitt einen umlaufenden Flansch 7 auf, über den es radial und axial an dem Nabenanschlussbereich 3 anliegend und mithin mittelbar an der Felge 2 befestigt ist. Das Nabenelement 6 erstreckt sich in seiner axialen Länge im Wesentlichen über die axiale Breite der Felge 2 und bietet an seinem seitlichen Randabschnitt Aufnahmen 8 für weitere Aggregate.

## Patentansprüche

1. Motorradrad mit einer geschmiedeten Felge (2) und einem zentralen Nabenanschlussbereich (3), wobei sich einstückig an der Felge (2) ausgebildete Speichen (4) von der Felge zu dem zentralen Nabenanschlussbereich (3) erstrecken, wobei ein an einem Motorrad befestigbares, eine Nabe des Motorradrades bildendes Nabenelement (6) lösbar an dem Nabenanschlussbereich (3) befestigt ist und **dadurch gekennzeichnet, dass** der Nabenanschlussbereich (3) mehrteilig und an jeder der Speichen (4) ausgebildet ist.

2. Motorradrad nach Anspruch 1, **dadurch gekennzeichnet, dass** der Nabenanschlussbereich (3) eine Axialöffnung (5) bildet, durch den das Nabenelement (6) axial steckbar und an dem Nabenanschlussbereich (3) befestigbar ist.

3. Motorradrad nach Anspruch 1 oder 2, **dadurch gekennzeichnet, dass** der Nabenanschlussbereich (3) und das Nabenelement (6) in einer axialen Draufsicht eine Sternform aufweisen.

4. Motorradrad nach zumindest einem der vorigen Ansprüche, **dadurch gekennzeichnet, dass** das Nabenelement (6) sich radial erstreckende Stege aufweist, die im montierten Zustand mit Ausnehmungen des Nabenanschlussbereichs (3) in Eingriff stehen.

5. Motorradrad nach zumindest einem der vorigen Ansprüche 1 bis 3, **dadurch gekennzeichnet, dass** das Nabenelement (6) einen Flansch aufweist, über den es radial und axial an dem Nabenanschlussbereich (3) anliegend daran befestigt ist.

6. Motorradrad nach zumindest einem der vorigen Ansprüche, **dadurch gekennzeichnet, dass** an dem Nabenelement (6) Bremsendome angeordnet sind.

7. Motorradrad nach zumindest einem der vorigen Ansprüche, **dadurch gekennzeichnet, dass** das Nabenelement (6) als Hohlkörper ausgebildet ist.

8. Motorradrad nach zumindest einem der vorigen Ansprüche, **dadurch gekennzeichnet, dass** das Nabenelement (6) eine axiale Länge aufweist, die im Wesentlichen einer axialen Breite der Felge (2) entspricht.

9. Motorradrad nach zumindest einem der vorigen Ansprüche, **dadurch gekennzeichnet, dass** es zweiteilig ist.

## Claims

1. A motorcycle wheel with a forged rim (2) and a central hub attachment region (3), wherein spokes (4) formed in one piece on the rim (2) extend from the rim to the central hub attachment region (3), wherein a hub element (6) which can be fastened to a motorcycle and forms a hub of the motorcycle wheel is fastened detachably to the hub attachment region (3), and **characterised in that** the hub attachment region (3) is formed in several parts and on each of the spokes (4).

2. A motorcycle wheel according to Claim 1, **characterised in that** the hub attachment region (3) forms an axial opening (5) through which the hub element (6) can be inserted axially and can be fastened to the hub attachment region (3).

3. A motorcycle wheel according to Claim 1 or Claim 2, **characterised in that** the hub attachment region (3) and the hub element (6) have a star shape in an axial top view.

4. A motorcycle wheel according to at least one of the preceding claims, **characterised in that** the hub element (6) has radially extending lands which in the mounted state engage with recesses of the hub attachment region (3).

5. A motorcycle wheel according to at least one of the preceding Claims 1 to 3, **characterised in that** the hub element (6) has a flange by means of which it is fastened to the hub attachment region (3), adjoining it radially and axially.

6. A motorcycle wheel according to at least one of the preceding claims, **characterised in that** brake domes are arranged on the hub element (6).

7. A motorcycle wheel according to at least one of the preceding claims, **characterised in that** the hub element (6) is formed as a hollow body.

8. A motorcycle wheel according to at least one of the preceding claims, **characterised in that** the hub element (6) has an axial length which corresponds substantially to an axial width of the rim (2).

9. A motorcycle wheel according to at least one of the preceding claims, **characterised in that** it is in two parts.

## Revendications

1. Roue de motocycle comportant une jante (2), forgée, et une zone centrale (3) de raccordement de moyeu,
* des rayons (4) réalisés en une seule pièce sur la jante (2) s'étendant entre la jante et la zone centrale de raccordement de moyeu (3),
* un élément de moyeu (6) qui peut être fixé à un motocycle, qui forme le moyeu de la roue de motocycle, est fixé de manière amovible à la zone de raccordement de moyeu (3),
roue **caractérisée en ce que**
la zone de raccordement de moyeu (3) est en plusieurs parties et est réalisée sur chacun des rayons (4).

2. Roue de motocycle selon la revendication 1,
**caractérisée en ce que**
la zone de raccordement de moyeu (3) forme une ouverture axiale (5) à travers laquelle on peut engager axialement l'élément de moyeu (6) et à laquelle se fixe la zone de raccordement de moyeu (3).

3. Roue de motocycle selon la revendication 1 ou 2,
**caractérisée en ce que**
en vue de dessus axiale la zone de raccordement de moyeu (3) et l'élément de moyeu (6) ont une forme en étoile.

4. Roue de motocycle selon au moins l'une des revendications précédentes,
**caractérisée en ce que**
l'élément de moyeu (6) a des rayons s'étendant radialement et qui, à l'état monté, sont en prise avec des évidements de la zone de raccordement de moyeu (3).

5. Roue de motocycle selon au moins l'une des revendications 1 à 3,
**caractérisée en ce que**
l'élément de moyeu (6) a une bride par laquelle elle s'appuie et est fixée radialement et axialement à la zone de raccordement de moyeu (3).

6. Roue de motocycle selon au moins l'une des revendications précédentes,
**caractérisée en ce qu'**
un dôme de frein est prévu sur l'élément de moyeu (6).

7. Roue de motocycle selon au moins l'une des revendications précédentes,
**caractérisée en ce que**
l'élément de moyeu (6) est un corps creux.

8. Roue de motocycle selon au moins l'une des revendications précédentes,
**caractérisée en ce que**
l'élément de moyeu (6) a une longueur axiale qui correspond pour l'essentiel à la largeur axiale de la jante (2).

9. Roue de motocycle selon au moins l'une des revendications précédentes,
**caractérisée en ce qu'**
elle est en deux parties.
